# EUROPÄISCHE PATENTSCHRIFT

(11) **EP 1 862 590 B1**
(45) Veröffentlichungstag und Bekanntmachung des Hinweises auf die Patenterteilung: **09.11.2011**
(21) Anmeldenummer: 07010005.2
(22) Anmeldetag: 19.05.2007
(51) Int. Cl.: D21G 1/02, F16C 13/02

(54) **Walze**
Roll
Rouleau

(30) Priorität: 29.05.2006 DE 102006025247
(43) Veröffentlichungstag der Anmeldung: 05.12.2007
(73) Patentinhaber: Andritz Küsters GmbH, 47805 Krefeld (DE)
(72) Erfinder: Kubik, Klaus, 47918 Tönisvorst (DE); Spoerer, Walter, 41751 Viersen (DE); Köllen, Rolf, 47906 Kempen (DE)
(74) Vertreter: Kluin, Jörg-Eden

(56) Entgegenhaltungen:
- EP-A2- 1 314 899
- DE-A1- 3 639 935
- DE-B4- 10 035 804
- DE-U1- 9 218 151

## Beschreibung

Die Erfindung bezieht sich auf eine Walze, mit einer den arbeitenden Walzenumfang bildenden umlaufenden Hohlwalze, mit einer diese der Länge nach durchgreifenden, ringsum Abstand zum Innenumfang der Hohlwalze belassenden Querhaupt, auf welches an den aus der Hohlwalze hervorragenden Enden über zumindest eine Abstützung äußere Kräfte aufbringbar sind und auf dem sich die Hohlwalze über eine in dem Zwischenraum zwischen der Hohlwalze und dem Querhaupt befindliche Druck- und Wärmeträgerflüssigkeit abstützt, mit einer außerhalb jedes Endes der Hohlwalze angeordneten Lagerglocke, die einen Bereich großen Innendurchmessers und einen zum äußeren Ende der Walze hin axial benachbarten Bereich geringeren Innendurchmessers aufweist, in den sich das Querhaupt hinein erstreckt, wobei die Lagerglocke in dem Bereich verringerten Innendurchmessers in das dortige Ende des Querhaupts spielfrei auf einer Stützlänge umgreift und abstützt und wobei die äußeren Kräfte der Abstützung an der Lagerglocke angreifen, mit einem axialen Ansatz an jedem Ende der Hohlwalze, der im Außendurchmesser gegenüber dem Durchmesser der Hohlwalze verringert ist und mit radialem Spiel axial in die Lagerglocke in deren Bereich großen Innendurchmessers eingreift, wobei an jedem Ende der Hohlwalze im Eingreifbereich zwischen der Außenseite des Ansatzes und der Lagerglocke ein Lager angeordnet ist, auf welchem die Hohlwalze gegenüber der Lagerglocke drehbar abgestützt ist, mit einer am Ende des axialen Ansatzes axial außerhalb des Lagers angeordneten Drehdichtung, die den Abstandsraum zwischen dem aus der Hohlwalze vorstehenden Ende des Querhauptes und dem Innenumfang des Ansatzes gegen das Innere des Bereichs großen Durchmessers der Lagerglocke abdichtet und von einer Kammer, die gegenüber dem Lager mittels einer Dichtungsanordnung abgedichtet ist, umgeben ist, mit einer in die Lagerglocke und in das Lager führenden Zuleitung für Schmierflüssigkeit, und mit einem in dem Bereich großen Durchmessers der Lagerglocke vorgesehenen Abfluss für die dem Lager zugeführte Schmierflüssigkeit.

Eine derartige Walze ist aus der DE 36 39 935 A1 bekannt.

Bei dieser Walze ist das Lager, auf welchem die Hohlwalze gegenüber der Lagerglocke abgestützt ist, mittels einer Dichtungsanordnung gegenüber einer Kammer, die die Drehdichtung umgibt, abgedichtet. Hierdurch soll für die Lagerschmierung ein anderes Medium verwendet werden können; das als Druck- und Wärmeträgerflüssigkeit eingesetzt wird.

Zur Kühlung der Drehdichtung, die sich nicht nur bei einer Beheizung der Walze, sondern auch aufgrund der während des Betriebs der Walze entstehenden Reibleistung aufheizt, ist eine in die Kammer mündende Zuleitung vorgesehen, über welcher der Kammer Stickstoff zugeführt werden kann.

In der Praxis hat sich gezeigt, dass die Drehdichtungen bei einer derartigen Walze insbesondere mit wachsender Betriebsdrehzahl der Walze einem erheblichen Verschleiß ausgesetzt sind, was auf trotz der Kühlung noch zu hoher, lokaler Temperaturen von Bauteilen der Drehdichtung zurückzuführen ist sowie darauf, dass es trotz der Stickstoffzufuhr zu Vercrackungen von Leckageöl kommt, die zwischen die Dichtflächen gelangen und diese beschädigen können.

Um den Verschleiß der Drehdichtung insbesondere bei hohen Drehzahlen und Wärmeträgertemperaturen zu reduzieren, ist aus der DE 100 35 804 B4 eine Walze bekannt, bei welcher das Lager, auf welchem die Hohlwalze gegenüber der Lagerglocke drehbar abgestützt ist, mit der Druck- bzw. Wärmeträgerflüssigkeit geschmiert wird. Um eine ausreichende Schmierwirkung durch diese eine sehr niedrige Viskosität insbesondere bei erhöhten Temperaturen von bis zu 250° C aufweisende Flüssigkeit zu erreichen, wird dem Lager über einen zwischen der Zuleitung und dem Abfluss eingeschalteten Kreislauf, in dem gegebenenfalls Kühleinrichtungen für die Flüssigkeit eingeschaltet sein können, Druck- und Wärmeträgerflüssigkeit zugeführt. Da keine unterschiedlichen Medien als Druck- und Kühlmedium sowie als Schmiermittel für das Lager verwendet werden, wird bei dieser Walze auf eine Abdichtung zwischen dem Lager und der Drehdichtung verzichtet.

Zur Kühlung der Drehdichtung und zur Vermeidung von Ausbildung von Vercrackungen wird der Drehdichtung über dieselbe Zuleitung Druck- und Wärmeträgerflüssigkeit zugeführt. Hierdurch ist die äußere Umgebung der Drehdichtung stets mit Druck- und Wärmeträgerflüssigkeit versehen, so dass die Schmierung der Drehdichtung verbessert und die Gefahr des Anlagerns von Vercrackungen durch Reduzierung des Sauerstoffgehaltes und durch die reinigende Wirkung der zugeführten Druck- und Wärmeträgerflüssigkeit reduziert wird.

Zwar hat sich gezeigt, dass trotz der vereinfachten Konstruktion und der damit verbundenen Möglichkeit des Einsetzens ein und desselben Mediums als Druck- und Wärmeträgerflüssigkeit sowie als Schmiermittel für das Lager der Verschleiß von Lager- und Drehdichtung reduziert werden konnte.

In jüngerer Vergangenheit werden insbesondere beim "Thermobonding" von Vliesstoffen, bei dem eine Vlieslage beim Durchtritt durch einen Walzenspalt, an dessen Bildung zumindest eine beheizte, durchbiegesteuerbare Walze beteiligt ist, verfestigt wird, immer höhere Prozessgeschwindigkeiten erreicht. Um den für die Verfestigung notwendigen Wärmeeintrag bewerkstelligen zu können, werden höhere Walzentemperaturen benötigt. Zudem steigt aufgrund der höheren Drehzahl die Wärme, die durch die höhere, von der Drehdichtung produzierte Reibleistung entsteht.

Es hat sich in der Praxis gezeigt, dass herkömmliche Walzen der eingangs genannten Art für die heutzutage gewünschten, hohen Prozessgeschwindigkeiten nur bedingt geeignet sind, da die bei den hohen Temperaturen nur sehr geringe Viskosität der Druck- und Wärmeträgerflüssigkeit nicht eine für das Lager ausreichende Schmierwirkung aufweist und aufgrund der hohen Drehdichtungstemperaturen Leckageöl Vercrackungen bildet, die beim Eintritt zwischen die Dichtflächen der Drehdichtung selbige beschädigen oder zerstören können.

Der Erfindung liegt daher die Aufgabe zugrunde, eine gattungsgemäße Walze derart weiterzubilden, dass sie für höhere Betriebstemperaturen und Drehgeschwindigkeiten geeignet ist.

Diese Aufgabe wird durch die in Anspruch 1 wiedergegebene Walze gelöst.

Bei dieser Walze wird erfindungsgemäß eine zu der Drehdichtung führende Zuleitung für Druck- und Wärmeträgerflüssigkeit und ein Abfluss für die der Drehdichtung zugeführte Druck- und Wärmeträgerflüssigkeit vorgesehen. Da die Walze zudem eine in die Lagerglocke und in das Lager führende Zuleitung für Schmierflüssigkeit umfasst, können bei der erfindungsgemäßen Walze zwei separate Kreisläufe errichtet werden, nämlich ein Kreislauf für Schmiermittel für das Lager sowie ein zweiter Kreislauf für Druck- und Wärmeträgerflüssigkeit, von der die Drehdichtung über die entsprechende Zuleitung und durch den entsprechenden Abfluss umspült wird.

Zum Betrieb der erfindungsgemäßen Walze können somit zwei unterschiedliche Medien Verwendung finden:
- ein Schmiermittel zur Schmierung des Lagers auf welchem die Hohlwalze gegenüber der Lagerglocke drehbar abgestützt ist, dessen Eigenschaften auf das Lager abgestimmt ist, sowie
- eine Druck- und Wärmeträgerflüssigkeit, die die nötige Druck- und Wärmebeständigkeit für den gewünschten Einsatz aufweist.

Dadurch, dass die Drehdichtung vollständig von frischer, gegebenenfalls vorgekühlter Druck- und Wärmeträgerflüssigkeit umspült werden kann, ist eine gute Kühlung derselben sichergestellt und es wird aufgrund der somit erzielten nied-rigeren Temperaturen und der aufgrund der Spülung bewirkten Sauerstoffabschirmung vermieden, dass sich Vercrackungen ausbilden.

Grundsätzlich ist es möglich, über die Zuleitung der Kammer, die die Drehdichtung umgibt, stets frische Druck- und Wärmeträgerflüssigkeit zuzuführen und über den Abfluss zu entsorgen. Besonders bevorzugt ist es jedoch, wenn die Zuleitung und der Abfluss Teil eines Kreislaufs sind, in welchem die Druck- und Wärmeträgerflüssigkeit umgepumpt und gegebenenfalls gereinigt und gekühlt wird.

Aus entsprechenden Gründen ist es des weiteren bevorzugt, wenn auch die Zuleitung und der Abfluss für das Schmiermittel für die Lagerschmierung Teil eines Kreislaufs sind, in welchem das Schmiermittel umgepumpt wird, gegebenenfalls wiederum unter Zwischenschaltung von Reinigungs- oder Kühlanlagen.

Die Drehdichtung ist vorzugsweise als Gleitringdichtung ausgebildet.

Die Dichtungsanordnung, mittels der die Kammer gegenüber dem Lager abgedichtet ist, umfasst vorzugsweise einen Wellendichtring.

Alternativ oder zusätzlich kann die Dichtungsanordnung zudem eine Elastomerdichtung aufweisen.

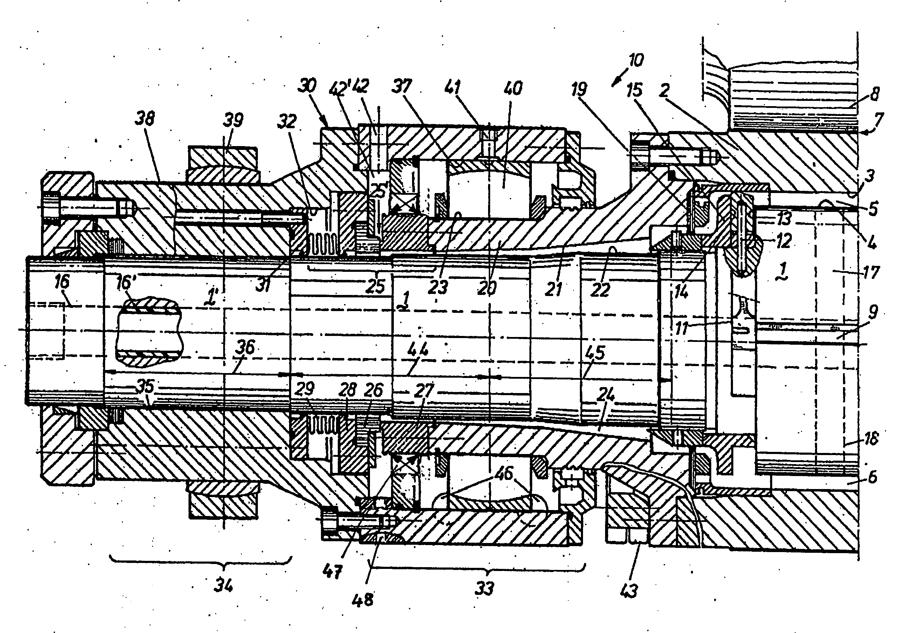

In der Zeichnung ist ein Ausführungsbeispiel der Erfindung anhand einer schwimmenden Walze dargestellt. Sie zeigt einen Teillängsschnitt durch das linke Ende dieses Ausführungsbeispiels der erfindungsgemäßen Walze.

Die in der Zeichnung als Ganzes mit 10 bezeichnete Walze umfasst ein feststehendes Querhaupt 1 in Gestalt eines im wesentlichen massiven und zylindrischen Trägers, um welchen eine Hohlwalze 2 umläuft, die mit ihrem Innenumfang 3 Abstand von dem Außenumfang 4 des Querhaupts 1 belässt. Der zylindrische Zwischenraum zwischen dem Innenumfang 3 der Hohlwalze 2 und dem Außenumfang 4 des Querhaupts 1 ist in eine auf der Seite des Walzenspalts 7, d.h. auf der Seite einer Gegenwalze 8, gelegene Längskammer 5 (Druckkammer) und eine auf der gegenüberliegenden Seite gelegene Längskammer 6 (Leckkammer) unterteilt, und zwar durch am Querhaupt angeordnete, am Innenumfang 3 der Hohlwalze 2 dichtend anliegende Längsdichtungen 9, die zu beiden Seiten des Querhaupts 1 an dessen breitester Stelle angeordnet sind und von denen in der Zeichnung nur die vordere Längsdichtung 9 zu sehen ist. Die Längskammern 5, 6 haben also etwa die Gestalt zylindrischer Halbschalen, und es ist die Längskammer 5 (Druckkammer) an beiden Enden durch Endquerdichtungen 11 geschlossen. Die Endquerdichtungen 11 haben in dem Ausführungsbeispiel die Form von Halbringen, die sich über die obere Hälfte des Querhauptes erstrecken und mit ihrem Außenumfang am Innenumfang 3 der Hohlwalze 2 anliegen. Die Endquerdichtungen 11 sind an Führungsstiften 12 geführt, die sich senkrecht zur Achse des Querhauptes 1 in der Wirkebene erstrecken, d.h. in der Ebene, in der die Resultierende der von der Druckflüssigkeit in der Längskammer 5 ausgeübten Kräfte liegt. Diese Wirkebene fällt in vielen Fällen mit der Verbindungsebene der Achse der Hohlwalze 2 und der Achse der Gegenwalze 8 zusammen.

Die Endquerdichtung 11 hat einen im wesentlichen rechteckigen Querschnitt und liegt mit einer Flanke an einem Absatz 13 des Querhauptes 1 an, mit der anderen Flanke an der Flanke 14 eines von dem Führungsstift 12 auf dem Querhaupt 1 festgehaltenen Halterings 15.

Die Längsdichtungen 9 auf den beiden Seiten bilden mit den an den beiden Enden der Hohlwalze 2 angebrachten Endquerdichtungen eine geschlossene Druckkammer 5, die über eine isolierte Zuleitung 16, die in einen Einlass 17 an der Oberseite des Querhauptes 1 mündet, mit Druck- und Wärmeträgerflüssigkeit versorgt werden kann. Die Druck- und Wärmeträgerflüssigkeit strömt in der Längskammer 5 gemäß der Zeichnung nach rechts, tritt nahe dem dortigen Ende der Längskammer 5 durch einen Querkanal in die Leckkammer 6 über und strömt in dieser wieder von rechts nach links, um an dem Auslass 18 und einem nicht dargestellten Auslasskanal wieder abgesaugt zu werden. Die Leckkammer 6 ist manchmal auch mit Druckflüssigkeit gefüllt. Sie hat dann ebenfalls Endquerdichtungen. Der Druck in der Leckkammer 6 ist dann allerdings geringer als der in der Leckkammer 5. Für die Ausübung des Liniendrucks im Walzenspalt 7 ist die Differenz der Drücke in den beiden Kammern 5, 6 maßgebend.

In dem gezeigten Ausführungsbeispiel jedoch ist die Leckkammer nach links nicht durch eine Endquerdichtung abgeschlossen. Es kann also Druckflüssigkeit an dem Auslass 18 vorbei nach links über die Flanke 13 hinaus übertreten. Damit die Hauptmenge in der Leckkammer 6 verbleibt, ist ein Abweisring 19 vorgesehen, der anströmende Flüssigkeit wieder in die Leckkammer 6 zurücklenkt, wo sie über den Auslass 18 abgeführt wird.

An der Hohlwalze 2 ist stirnseitig ein hülsen- oder buchsenartiger Ansatz 20 befestigt, der die Hohlwalze 2 fortsetzt und dessen Außenumfang 23 einen geringeren Durchmesser als der Außendurchmesser der Hohlwalze 2 besitzt. Der Innenumfang 21 des Ansatzes 20 belässt einen geringen Abstand zum Außenumfang 22 des aus der Hohlwalze 2 hervorragenden Endes des Querhauptes 1. Es ist also ein Abstandsraum 24 gebildet, in welchen geringfügige Anteile der Druck- und Wärmeträgerflüssigkeit aus der Leckkammer 6 übertreten können, wenn sie den Abweisring 19 überwunden haben. Eine wesentliche Strömung kann in dem Abstandsraum 24 jedoch nicht stattfinden, weil dieser am in der Zeichnung linken Ende durch eine als Ganzes mit 25 bezeichnete Gleitringdichtung verschlossen ist. Die Gleitringdichtung 25 umfasst den eigentlichen Gleitring 26, der an seinem Innenumfang Abstand vom Querhaupt 1 belässt, den Gegenring 27, der mit der Stirnseite des Ansatzes 20 verbunden ist, einen Führungsring 28, der den Gleitring 26 in der richtigen Position hält und der über einen Metallbalg 29 abgedichtet ist. Der Metallbalg 29 ist an seinem einen axialen Ende dicht mit dem Führungsring 28 verbunden, an dem anderen axialen Ende mit einem Haltering 31, der in einer zylindrischen Ausnehmung 32 einer als Ganzes mit 30 bezeichneten Lagerglocke befestigt ist. Die Lagerglocke 30 ist in dem Ausführungsbeispiel zweiteilig ausgeführt und besitzt einen Bereich 33 größeren Innendurchmessers, der der Hohlwalze 2 zugewandt ist und einen geringfügig kleineren Außendurchmesser als diese aufweist, sowie einen daran anschließenden Bereich 34 kleineren Innen- und Außendurchmessers, der mit seinem zylindrischen Innenumfang 35 auf dem zylindrischen Endteil 1' des Querhauptes 1 spielfrei aufgeschoben ist. Diese Anordnung ergibt eine Führungslänge 36, die die Fluchtung zwischen der Achse des Querhauptes und der Achse der Lagerglocke 30 aufrechterhält, auch wenn die Lagerglocke 30 außerhalb des Bereichs 34 radial belastet wird. Eine solche Belastung kommt durch das Lager 40 zustande, welches in dem Bereich 33 der Lagerglocke 30 zwischen dessen Innenumfang 37 und dem Außenumfang 23 des Ansatzes 20 angeordnet ist und auf welchem die Hohlwalze 2 an der Lagerglocke 30 drehbar abgestützt ist. Da sich das Querhaupt 1 innerhalb der Hohlwalze 2 bei Belastung durchbiegt und die Lagerglocke 30, da sie ja über die Führungslänge 36 fest mit dem Querhaupt 1 verbunden ist, dieser Durchbiegung folgt, die Hohlwalze 2 aber nicht, sind die Lager 40 als Pendellager ausgebildet, die Fluchtfehler zwischen den Flächen 23 und 37 ausgleichen können.

Die äußeren Kräfte werden in das aus der Hohlwalze 2 vorstehende Ende 1' des Querhauptes 1 in dem Bereich 34 der Lagerglocke 30 eingeleitet, und zwar durch das auf dem dortigen Außenumfang 38 der Lagerglocke 30 angeordnete Pendellager 39, welches aber im Gegensatz zu dem Pendellager 40 kein Drehlager ist, da ja die Lagerglocke 30 ebenso wie das Querhaupt 1 stillsteht. Da der Außenumfang 38 des Bereichs 34 der Lagerglocke 30 einen wesentlich geringeren Durchmesser als die Hohlwalze 2 aufweist, kann erreicht werden, dass der Außendurchmesser des Pendellagers 39 ebenfalls noch kleiner ist als der Außendurchmesser der Hohlwalze 2, was aus konstruktiven Gründen erwünscht ist.

Durch die gezeigte Konstruktion ist es möglich, den Kreislauf der Druck- und Wärmeträgerflüssigkeit in den Längskammern 5 und 6 gänzlich von dem Schmierkreislauf für das Lager 40 zu trennen. Die Druck- und Wärmeträgerflüssigkeit kann zwar noch in den Zwischenraum 24 eindringen, jedoch nur bis zu der Gleitringdichtung 25. Die Schmierflüssigkeit für die Lager 40 wird an dem Einlass 41 oben zugeführt und an den Auslässen 46 drucklos, d.h. ohne Staubildung, unten wieder abgesaugt, zusammen mit etwaigen minimalen Mengen an der Gleitringdichtung 25 übergetretener Flüssigkeit aus dem Zwischenraum 24. Da die Flüssigkeit in dem Zwischenraum 24 steht und nicht strömt, kühlt sie sich ab, so dass ein nennenswerter Wärmeübergang in das Lager 40 nicht stattfindet. Hierzu trägt auch die Isolierung 16' der Zuleitung 16 bei.

Der Einlass 41 und die Auslässe 46 sind an einem in der Zeichnung nicht dargestellten Kreislauf für die Schmierflüssigkeit angeschlossen. Der Kreislauf kann Einrichtungen zur Reinigung und Kühlung der Schmierflüssigkeit umfassen.

Die Gleitfläche 25' der Gleitringdichtung 25 ist von einer Kammer 42' ringförmig umgeben, der durch eine Zuleitung 42 Druck- und Wärmeträgermedium zugeführt werden kann. Die Kammer ist mittels einer Dichtungsanordnung 47 gegenüber dem Lager 40 abgedichtet. Die Dichtungsanordnung 47 kann beispielsweise einen Wellendichtring oder eine Elastomerdichtung umfassen. Über die Zuleitung 42 wird der Kammer 42' Druck- und Schmiermedium zugeführt, so dass die Gleitringdichtung 25 zumindest nahezu vollständig von Druck- und Schmiermedium umgeben ist. Über einen Abfluss 48 wird kontinuierlich Druck- und Wärmeträgermedium abgezogen, so dass die Gleitringdichtung 25 stets umspült ist. Sowohl die Zuleitung 42, als auch der Abfluss 48 können an einen in der Zeichnung nicht dargestellten Kreislauf angeschlossen sein, in dem das Druck- und Wärmeträgermedium umgepumpt und gegebenenfalls gereinigt und gekühlt wird.

## Patentansprüche

1. Walze (10),
mit einer den arbeitenden Walzenumfang bildenden umlaufenden Hohlwalze (2),
mit einem diese der Länge nach durchgreifenden, ringsum Abstand zum Innenumfang (3) der Hohlwalze (2) belassenen undrehbaren Querhaupt (1), auf welches an den aus der Hohlwalze hervorragenden Enden über zumindest eine Abstützung äußere Kräfte aufbringbar sind und auf dem sich die Hohlwalze (2) über eine in dem Zwischenraum (5) zwischen der Hohlwalze (2) und dem Querhaupt (1) befindliche Druck- und Wärmeträgerflüssigkeit abstützt,
mit einer außerhalb jedes Endes der Hohlwalze (2) angeordneten Lagerglocke (30), die einen Bereich (33) großen Innendurchmessers und einen zum äußeren Ende der Walze (10) hin axial benachbarten Bereich (34) geringeren Innendurchmessers aufweist, in den sich das Querhaupt (1) hineinerstreckt, wobei die Lagerglocke (30) in dem Bereich (34) verringerten Innendurchmessers das dortige Ende (1') des Querhauptes spielfrei auf einer Stützlänge (36) umgreift und abstützt und wobei die äußeren Kräfte der Abstützung an der Lagerglocke (30) angreifen,
mit einem axialen Ansatz (20) an jedem Ende der Hohlwalze (2), der im Außendurchmesser gegenüber dem Durchmesser der Hohlwalze verringert ist und mit radialem Spiel axial in die Lagerglocke (30) in deren Bereich (33) großen Innendurchmessers eingreift, wobei an jedem Ende der Hohlwalze (2) im Eingreifbereich zwischen der Außenseite (23) des Ansatzes (20) und der Lagerglocke (30) ein Lager (40) angeordnet ist, auf welchem die Hohlwalze (2) gegenüber der Lagerglocke (30) drehbar abgestützt ist,
mit einer am Ende des axialen Ansatzes axial außerhalb des Lagers (40) angeordneten Drehdichtung, die den Abstandsraum (24) zwischen dem aus der Hohlwalze (2) vorstehenden Ende des Querhauptes (1) und dem Innenumfang des Ansatzes (20) gegen das Innere des Bereichs (33) großen Durchmessers der Lagerglocke (30) abdichtet und von einer Kammer (42'), die gegenüber dem Lager (40) mittels einer Dichtungsanordnung abgedichtet ist, umgeben ist,
mit einer in die Lagerglocke und in das Lager (40) führenden Zuleitung (41) für Schmierflüssigkeit
und mit einem in dem Bereich (33) großen Durchmessers der Lagerglocke (30) vorgesehenen Abfluss (50) für die dem Lager (40) zugeführte Schinierflüssigkeit,
**dadurch gekennzeichnet,**
**dass** eine zu der Drehdichtung (47) führende Zuleitung (42) für Druck- und Wärmeträgerflüssigkeit und ein Abfluss (48) für die in der Drehdichtung (47) zugeführte Druck- und Wärmeträgerflüssigkeit vorgesehen sind.

2. Walze nach Anspruch 1, **dadurch gekennzeichnet, dass** die Zuleitung (42) und der Abfluss (48) für die Druck- und Wärmeträgerflüssigkeit Teil eines Kreislaufs sind.

3. Walze nach Anspruch 1 oder 2, **dadurch gekennzeichnet, dass** die Zuleitung (41) und der Abfluss (46) für die Schmierflüssigkeit Teil eines Kreislaufs sind.

4. Walze nach einem der Ansprüche 1 bis 3, **dadurch gekennzeichnet, dass** die Drehdichtung (25) eine Gleitringdichtung ist.

5. Walze nach einem der Ansprüche 1 bis 4, **dadurch gekennzeichnet, dass** die Dichtungsanordnung (47) einen Wellendichtring umfasst.

6. Walze nach einem der Ansprüche 1 bis 5, **dadurch gekennzeichnet, dass** die Dichtungsanordnung eine Elastomerdichtung umfasst.

## Claims

1. Roll (10)
comprising a revolving hollow roll (2) forming the working roll circumference,
comprising a fixed axle (1) which passes lengthwise through said hollow roll (2) and leaves a gap all around relative to the inner circumference (3) of the hollow roll (2) and to which external forces can be applied via at least one support at the ends projecting from the hollow roll and on which the hollow roll (2) is supported via a pressure and heat-transfer fluid located in the space (5) between the hollow roll (2) and the axle (1),
comprising a bearing bell (30) which is arranged outside each end of the hollow roll (2) and which has a region (33) of large inside diameter and a region (34) of smaller inside diameter which is axially adjacent to the outer end of the roll (10), into which regions (33, 34) the axle (1) extends, wherein the bearing bell (30), in the region of reduced inside diameter, encloses and supports the end (1') of the axle there in a manner free of play over a supporting length (36), and wherein the external forces of the support act on the bearing bell (30),
comprising an axial extension (20) at each end of the hollow roll (2), said extension (20) being reduced in outside diameter relative to the diameter of the hollow roll and engaging axially with radial play in the bearing bell (30) in its region (33) of large inside diameter, wherein a bearing (40) is arranged at each end of the hollow roll (2) in the engagement region between the outer side (23) of the extension (20) and the bearing bell (30), on which bearing (40) the hollow roll (2) is rotatably supported relative to the bearing bell (30),
comprising a rotary seal which is arranged on the end of the axial extension axially outside the bearing (40) and which seals the space (24) between that end of the axle (1) which projects from the hollow roll (2) and the inner circumference of the extension (20) relative to the interior of the region (33) of large diameter of the bearing bell (30) and is surrounded by a chamber (42') which is sealed relative to the bearing (40) by means of a seal arrangement,
comprising a feed line (41) for lubricating fluid leading into the bearing bell and into the bearing (40),
and comprising an outflow (46), provided in the region (33) of large diameter of the bearing bell (30), for the lubricating fluid fed to the bearing (40), **characterized in that** a feed line (42), leading to the rotary seal (47), for pressure and heat-transfer fluid and an outflow (48) for the pressure and heat-transfer fluid fed in the rotary seal (47) are provided.

2. Roll according to Claim 1, **characterized in that** the feed line (42) and the outflow (48) for the pressure and heat-transfer fluid are part of a circuit.

3. Roll according to Claim 1 or 2, **characterized in that** the feed line (41) and the outflow (46) for the lubricating fluid are part of a circuit.

4. Roll according to one of Claims 1 to 3, **characterized in that** the rotary seal (25) is a mechanical face seal.

5. Roll according to one of Claims 1 to 4, **characterized in that** the seal arrangement (47) comprises a radial shaft seal.

6. Roll according to one of Claims 1 to 5, **characterized in that** the seal arrangement comprises an elastomer seal.

## Revendications

1. Rouleau (10), comprenant
un rouleau creux (2) entraîné en rotation, formant la périphérie de rouleau de travail,
une traverse (1) non rotative, traversant celui-ci sur toute sa longueur, laissant un espace tout autour par rapport à la périphérie intérieure (3) du rouleau creux (2), sur laquelle peuvent être appliquées des forces extérieures au niveau des extrémités saillant hors du rouleau creux par le biais d'au moins un support, et sur laquelle le rouleau creux (2) s'appuie par le biais d'un liquide caloporteur et sous pression se trouvant dans un espace intermédiaire (5) entre le rouleau creux (2) et la traverse (1),
une cloche de palier (30) disposée à l'extérieur de chaque extrémité du rouleau creux (2), qui présente une région (33) de grand diamètre intérieur et une région (34) de plus petit diamètre intérieur adjacente axialement vers l'extrémité extérieure du rouleau (10), dans laquelle région s'étend la traverse (1), la cloche de palier (30) dans la région (34) de plus petit diamètre intérieur venant en prise et s'appuyant sans jeu autour de l'extrémité (1') de la traverse à cet endroit sur une longueur d'appui (36), et les forces extérieures de l'appui s'exerçant sur la cloche de palier (30),
un insert axial (20) à chaque extrémité du rouleau creux (2), dont le diamètre extérieur est réduit par rapport au diamètre du rouleau creux et vient en prise avec un jeu radial axialement dans la cloche de palier (30) dans sa région (33) de plus grand diamètre intérieur, à chaque extrémité du rouleau creux (2) dans la région d'engagement entre le côté extérieur (23) de l'insert (20) et la cloche de palier (30) étant disposé un palier (40) sur lequel le rouleau creux (2) est supporté à rotation par rapport à la cloche de palier (30), un joint rotatif disposé à l'extrémité de l'insert axial, axialement à l'extérieur du palier (40), lequel scelle l'espace (24) entre l'extrémité de la traverse (1) saillant hors du rouleau creux (2) et la périphérie interne de l'insert (20) vis-à-vis de l'intérieur de la région (33) de grand diamètre de la cloche de palier (30), et est entouré par une chambre (42') qui est scellée vis-à-vis du palier (40) au moyen d'un agencement d'étanchéité,
une conduite d'amenée (41) de lubrifiant liquide conduisant dans le palier (40),
et une évacuation (46) prévue dans la région (33) de grand diamètre de la cloche de palier (30) pour le lubrifiant liquide acheminé au palier (40),
**caractérisé en ce**
**qu'**une conduite d'amenée (42) conduisant au joint rotatif (47) pour le liquide caloporteur et sous pression et une évacuation (48) pour le liquide caloporteur et sous pression acheminé dans le joint rotatif (47) sont prévus.

2. Rouleau selon la revendication 1, **caractérisé en ce que** la conduite d'amenée (42) et l'évacuation (48) pour le liquide caloporteur et sous pression font partie d'un circuit.

3. Rouleau selon la revendication 1 ou 2, **caractérisé en ce que** la conduite d'amenée (41) et l'évacuation (46) pour le lubrifiant liquide font partie d'un circuit.

4. Rouleau selon l'une quelconque des revendications 1 à 3, **caractérisé en ce que** le joint rotatif (25) est un joint d'étanchéité à bague coulissante.

5. Rouleau selon l'une quelconque des revendications 1 à 4, **caractérisé en ce que** l'agencement d'étanchéité (47) est une bague d'étanchéité pour arbre.

6. Rouleau selon l'une quelconque des revendications 1 à 5, **caractérisé en ce que** l'agencement d'étanchéité comprend un joint d'étanchéité élastomère.
